# EUROPÄISCHE PATENTSCHRIFT

(11) **EP 2 037 730 B1**
(45) Veröffentlichungstag und Bekanntmachung des Hinweises auf die Patenterteilung: **06.03.2013**
(21) Anmeldenummer: 07765148.7
(22) Anmeldetag: 10.07.2007
(51) Int. Cl.: A01J 5/08

(54) **ZITZENGUMMI MIT STOßABSORBIERENDEN EIGENSCHAFTEN**
TEAT RUBBER WITH SHOCK-ABSORBING PROPERTIES
ÉLÉMENT EN CAOUTCHOUC POUR TRAYONS PRÉSENTANT DES PROPRIÉTÉS D'ABSORPTION DES CHOCS

(30) Priorität: 10.07.2006 DE 102006032009; 20.04.2007 DE 102007019191
(43) Veröffentlichungstag der Anmeldung: 25.03.2009
(73) Patentinhaber: GEA Farm Technologies GmbH, 59199 Bönen (DE)
(72) Erfinder: Grüter, Thomas, 59556 Lippstadt (DE); Frenser, Reinhard, Dipl.-Ing., 33378 Rheda-Wiedenbrück (DE)
(74) Vertreter: Neumann, Ditmar
(86) Internationale Anmeldenummer: PCT/EP2007/006084
(87) Internationale Veröffentlichungsnummer: WO 2008/006539

(56) Entgegenhaltungen:
- EP-A- 0 477 950
- DE-A1- 19 635 719
- DE-B1- 2 941 150
- GB-A- 644 168

## Beschreibung

Der Gegenstand der Erfindung betrifft ein Zitzengummi zur Verwendung an einem Melkbecher mit einem Kopfteil, der eine Einführöffnung für eine Zitze eines Tieres aufweist, und mit einem mit dem Kopfteil verbundenen Schaftteil, sowie einem Melkbecher.

Ein Melkzeug, welches mehrere Melkbecher aufweist, wird zum maschinellen Melken eines Tieres, insbesondere einer Kuh, verwendet. Die Melkbecher sind in der Regel über Milchschläuche mit einer Sammeleinheit verbunden. Von der Sammeleinheit wird die abgemolkene Milch in einen Milchtank geleitet. Im Zusammenhang mit dem Melken eines Tieres ist auch bekannt, Melkbecher zu verwenden, welche unmittelbar mit einer Leitung des Melksystems verbunden sind, wobei eine Sammeleinheit nicht zum Einsatz gelangt.

Der Melkbecher umfasst eine Hülse, in der ein Zitzengummi angeordnet ist. Ein Zitzengummi oder auch Melkfomaschlauch genannt, kann unterschiedliche Ausgestaltungen aufweisen. Durch die WO 2005/070197 ist beispielsweise ein Zitzengummi zur Verwendung an einem Melkbecher mit einem Kopfteil, an dem eine Dichtlippe vorgesehen ist, die eine Einführöffnung für die Zitze bildet, bekannt. Das Kopfteil ist verbunden mit einem Schaftteil.

Bei der überwiegenden Anzahl der bekannten Ausgestaltungen eines Zitzengummis ist dieses einstückig ausgebildet. Da der Schaftteil des Zitzengummis zur Anlage an die Zitze gebracht wird, ist es zweckmäßig, dass das Schaftteil aus einem flexiblen Material besteht. Darüber hinaus wird gefordert, dass das Zitzengummi leicht gereinigt werden kann und mit dem Lebensmittel Milch verträglich ist

Ein Zitzengummi aus einem weichen Material, insbesondere aus Silikon weist viele Vorzüge auf. Es hat sich jedoch herausgestellt, dass bedingt durch die Paarung Hülse-Zitzengummi es zur Beschädigung des Zitzengummis kommen kann, wenn Kräfte, insbesondere schlagartig aufgebrachte Kräfte auf den Kopf des Zitzengummis einwirken. Die Hülse wird von einem Rand des Zitzengummi umgeben, wodurch es zu einer Beschädigung des Zitzengummis kommen kann. Dieses Problem ist bereits erkannt worden. Zur Lösung des Problems wird nach der DE 40 30 767 A1 vorgeschlagen, dass in dem in Längsrichtung und nach außen weisenden Teil des Randes des Melkbechers gegenüberliegenden Teil des Halterandes eine Ausnehmung vorgesehen ist. In die Ausnehmung wird ein Ring eingelegt, der aus einem anderen Material als das Material des Zitzengummis ist. Durch diese Maßnahme soll das Durchschlagverhalten des Halterndes verbessert werden.

Durch die Druckschrift DE 196 35 719 Al ist ein Zitzengummi zur Verwendung mit einem Melkbecher bekannt. Das Zitzengummi weist ein Kopfteil mit einer Einführöffnung für eine Zitze eines Tieres auf. Mit dem Kopfteil ist ein Schaftteil verbunden. Unterhalb des Kopfteils ist ein Halterand angeordnet, der beabstandet zum Schaftteil diesen umgibt. Es ist eine Nut vorgesehen, die in Umfangsrichtung gebildet ist, in die ein Rand einer Melkbecherhülse einbringbar ist.

Problematisch bei einer solchen Anordnung ist die Montage des Melkbechers. Sie ist mit einem nicht unerheblichen Aufwand verbunden. Zunächst wird der Haltering auf den Rand des Melkbechers aufgelegt. Anschließend wird der Kopf des Zitzengummis auf die Hülse aufgesteckt. Danach wird die Hülse mit dem Haltering soweit in Richtung des Kopfes bewegt, dass der untere Teil des Zitzengummis aus der Hülse herausragt.

Es ist auch bekannt, zur Verbesserung der Haltbarkeit des Zitzengummis den Bereich des Zitzengummis, der in Kontakt mit dem Rand zu Hülse kommt, durch einen dickeren Wulst auszubilden. Dies hat jedoch den Nachteil, dass der Kopf des Zitzengummis entsprechend groß wird, was insbesondere beim Melken von Tieren, deren Zitzen nah beieinander sind, problematisch ist.

Hiervon ausgehend liegt der vorliegenden Erfindung die Zielsetzung zugrunde, das bekannte Zitzengummi so weiterzuentwickeln, dass ein Durchschlagen des Zitzengummis an dem Rand des Melkbechers zumindest vermieden wird und die Montage des Zitzengummis in der Hülse verbessert wird.

Diese Aufgabe wird erfindungsgemäß durch ein Zitzengummi mit dem Merkmal des Anspruchs 1 gelöst. Vorteilhafte Weiterbildungen und Ausgestaltungen des erfindungsgemäßen Zitzengummis sind Gegenstand der jeweiligen abhängigen Ansprüche.

Das erfindungsgemäße Zitzengummi zur Verwendung an einem Melkbecher weist ein Kopfteil mit einer Einfuhröfmung für eine Zitze eines Tieres auf. Mit dem Kopfteil ist ein Schaftteil verbunden. Unterhalb des Kopfteiles ist ein Halterand angeordnet, der beabstandet zum Schaftteil, diesen umgibt. Das erfindungsgemäße Zitzengummi zeichnet sich dadurch aus, dass der Halterand in seiner inneren Mantelfläche mehrere sich im Wesentlichen in Umfangsrichtung des Halterandes erstreckende Ausnehmungen aufweist, welche im Wesentlichen in Umfangsrichtung des Halterandes betrachtet beabstandet angeordnet sind.

Ist das Zitzengummi mit der Hülse verbunden, so umgibt der Halterand einen Endbereich der Hülse und liegt an diesen an. Die Ausnehmungen sind vorzugsweise so in dem Zitzengummi eingebracht, dass diese wenigstens teilweise durch die Hülse abgedeckt sind. Die sich in den Ausnehmungen befindende Luft bildet ein Dämpfungspolster, so dass Schläge auf das Zitzengummi gedämpft werden. Durch diese erfindungsgemäße Ausgestaltung des Zitzengummis ist es nicht zwingend notwenig einen Schutzring einzubringen. Überraschender Weise hat sich herausgestellt, dass durch stellenweise Materialverminderung am Halterand das Durchschlagverhalten verbessert werden kann.

Dadurch, dass mehrere Ausnehmungen vorhanden sind, wird die Möglichkeit geschaffen, dass mehrere stoßdämpfende Bereiche am Zitzengummi vorgesehen sind. Darüber hinaus kann das Material des Zitzengummis in die Ausnehmungen answeichem wenn eine Kraft auf das Zitzengummi, insbesondere das Kopfteil einwirkt, so dass die inneren Spannungen des Zitzengummis reduziert werden in einen Bereich, der noch innerhalb der zulässigen Spannungen liegt.

Zur Vereinfachung der Herstellung des Zitzengummis wird vorgeschlagen, dass die Ausnehmungen äquidistant zueinander ausgebildet sind. Das Zitzengummi ist vorzugsweise als ein rotationssymmetrisches Bauteil ausgebildet.

Es hat sich als besonders vorteilhaft herausgestellt, dass die Ausnehmungen nicht nur in eine im Wesentlichen Umfangsrichtung verteilt auf den Rand ausgebildet sind, sondern auch in einer axialen Richtung versetzt zueinander vorgesehen sind. Durch die Maßnahme wird die dämpfende Eigenschaft des Zitzengummis noch weiter verbessert.

Besonders bevorzugt ist dabei eine Ausgestaltung, bei der ein erster Satz von Ausnehmungen und ein zweiter Satz von Ausnehmungen vorgesehen sind. Die Ausnehmungen des ersten Satzes und die Ausnehmungen des zweiten Satzes sind in Umfangsrichtung und in axialer Richtung so versetzt zueinander, dass in einer axialen Richtung betrachtet zwischen zwei benachbarten Ausnehmungen des ersten Satzes wenigstens eine Ausnehmung des zweiten Satzes vorgesehen ist. Hierdurch werden nicht nur die Eigenschaften des Zitzengummis hinsichtlich der Dämpfung von auf das Zitzengummi einwirkenden Kräften verbessert, sondern auch die Herstellung des erfindungsgemäßen Zitzengummis vereinfacht. Insbesondere wird die Endformbarkeit des Zitzengummis verbessert. Auch das zur Herstellung des Zitzengummis notwendige Werkzeug kann relativ einfach gestaltet werden.

Die Ausnehmungen können unterschiedlicher Gestalt oder Form sein. Bevorzugt ist eine Ausgestaltung, bei der die Ausnehmungen stets die gleiche Gestalt aufweisen. Besonders bevorzugt ist eine Ausgestaltung des Zitzengummis bei der die Gestalt der Ausnehmungen in Abhängigkeit von den auf das Zitzengummi einwirkenden Kräften angepasst ist

Nach einer noch weiteren vorteilhaften Ausgestaltung des erfindungsgemäßen Zitzengummis wird vorgeschlagen, dass der Querschnitt der wenigstens einen Ausnehmung zum Kopfteil hin zunimmt. Besonders bevorzugt ist dabei eine Ausgestaltung bei der der Querschnitt im Wesentlichen dreieckförmig ist. Die Bezeichnung dreieckförmig ist nicht im streng mathematischen Sinne gemeint. Die dreieckförmige Gestalt des Querschnittes kann auch in Rundungen übergehen.

Zur noch weitem Verbesserung der Eigenschaften des Zitzengummis wird vorgeschlagen dass der Halterand wenigstens eine Einlage aufweist. Besonders bevorzugt ist dabei eine Ausgestaltung, bei der die wenigstens eine Einlage mit dem Zitzengummi mittels eines Zweikomponenten-Spritzverfahrens hergestellt ist

Nach einem weiteren erfinderischen Gedanken wird ein Melkbecher mit einer Hülse und einem mit der Hülse verbundenen Zitzengummi vorgeschlagen. Das Zitzengummi weist ein Kopfteil mit einer Einführöffnung für eine Zitze eines Tieres auf. Mit dem Kopfteil ist ein Schaftteil verbunden. Unterhalb des Kopfteils ist ein Halterand angeordnet, der beabstandet zum Schaftteil, diesen umgibt. Der Halterand liegt an einem Bereich der Hülse an. Der Halterand des Zitzengummis weist in seiner inneren Mantelfläche wenigstens eine sich im Wesentlichen in Umfangsrichtung des Halterandes erstreckende Ausnehmung auf, wobei das Zitzengummi nach wenigstens einem der Ansprüche 2 bis 8 ausgebildet ist.

Die Erfindung hat weitere zahlreiche Vorteile. Das Zitzengummi kann aus einem Silikon hergestellt sein. Es besteht auch die Möglichkeit, dass das Zitzengummi aus anderen elastischen Materialien ausgebildet ist. Weitere Vorteile und Einzelheiten der Erfindung werden anhand der in den Zeichnung dargestellten Ausführungsbeispiele erläutert, ohne dass der Gegenstand der Erfindung auf diese Ausführungsbeispiele beschränkt wird.

Es zeigen:
- Fig. 1: im Schnitt ein erstes Ausführungsbeispiel,
- Fig. 2: schematisch eine Abwicklung des Halterandes,
- Fig. 3: in einer perspektivischen Ansicht den Halterand,
- Fig. 4: schematisch ein zweites Ausfühnmgsbeispiel eines Zitzengummis im Schnitt,
- Fig. 5: ein drittes Ausführungsbeispiel eines Zitzengummis im Schnitt,
- Fig. 6: eine Schnittdarstellung eines vierten Ausführungsbeispiels eines Zitzengummis,
- Fig. 7: eine Schnittdarstellung eines fünften Ausführungsbeispiels eines Zitzengummis,
- Fig. 8: im Schnitt ein Zitzengummi mit Hülse und
- Fig. 9: ein weiteres Ausruhnmgsbeispiel eines Zitzengummis im Schnitt.

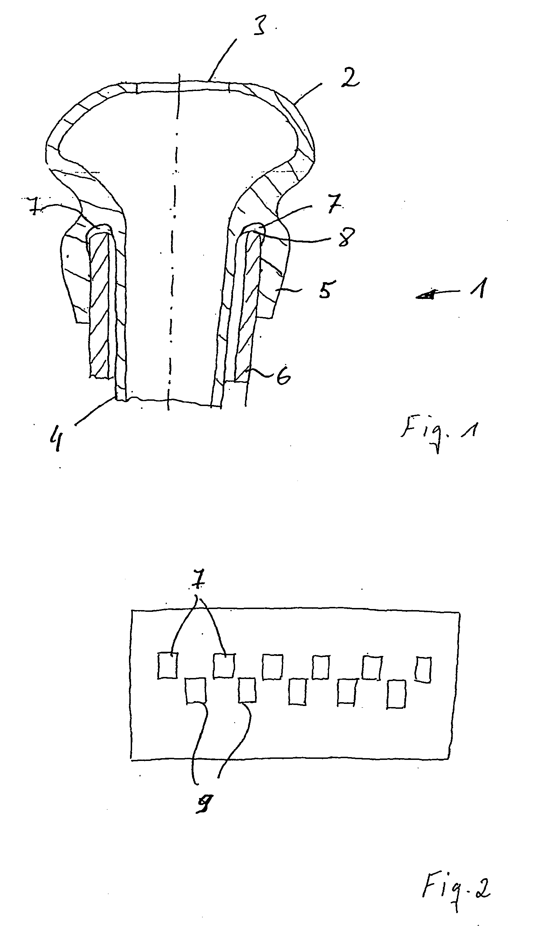

In der Fig. 1 ist schematisch ein Zitzengummi 1 zur Verwendung an einem Melkbecher dargestellt. Das Zitzengummi 1 weist ein Kopfteil 2 auf. Das Kopfteil 2 weist eine Einführoffnung 3 für eine Zitze eines Tieres auf Die Darstellung des Kopfteils 2 ist schematisch. Die Ausgestaltung und die Ausführung des Kopfteils kann unterschiedlich sein.

An das Kopfteil 2 schließt sich ein Schaftteil 4 an. Unterhalb des Kopfteils 2 ist ein Halterand 5 vorgesehen. Der Halterand 5 umgibt den Schaftteil 4. Zwischen dem Schaftteil 4 und dem Halterand 5 ist eine Hülse 6 vorgesehen. Der Halterand 5 liegt an der äußeren Mantelfläche der Hülse 6 an und legt das Zitzengummi wenigstens teilweise an der Hülse 6 fest.

In dem dargestellten Ausführungsbeispiel weist das Zitzengummi Ausnehmungen 7 auf. Die Ausnehmungen 7 erstrecken sich teilweise in Umfangsrichtung des Halterandes 5. Sie sind der Stirnfläche 8 der Hülse 6 gegenüberliegend ausgebildet. Die Stirnfläche 8 der Hülse 6 liegt vorzugsweise an den zwischen den Ausnehmungen 7 liegenden Bereichen an.

In der Fig. 2 ist schematisch eine Abwicklung des Halterandes insbesondere des Bereichs dargestellt, in dem die Stirnfläche 8 der Hülse 6 an dem Zitzengummi anliegt. Es sind Ausnehmungen 7 vorgesehen, die auf einem gedachten Kreisumfang verteilt sind. Die Ausnehmungen 7 sind äquidistant zueinander ausgebildet Sie bilden einen ersten Satz von Ausnehmungen. Die Darstellung nach Fig. 2 zeigt des weiteren Ausnehmungen 9. Die Ausnehmungen 9 sind äquidistant zueinander angeordnet. Sie bilden einen zweiten Satz von Ausnehmungen. Die Ausnehmungen des ersten Satzes und die Ausnehmungen des zweiten Satzes sind in Umfangsrichtung so zueinander versetzt, dass zwischen zwei benachbarten Ausnehmungen 7 des ersten Satzes wenigstens eine Ausnehmung 9 des zweiten Satzes vorgesehen ist Die Ausnehmungen des ersten Satzes und die Ausnehmungen des zweiten Satzes können auch in axialer Richtung versetzt sein. Es besteht die Möglichkeit, dass die Ausnehmungen 7, 9 sich teilweise überlappen.

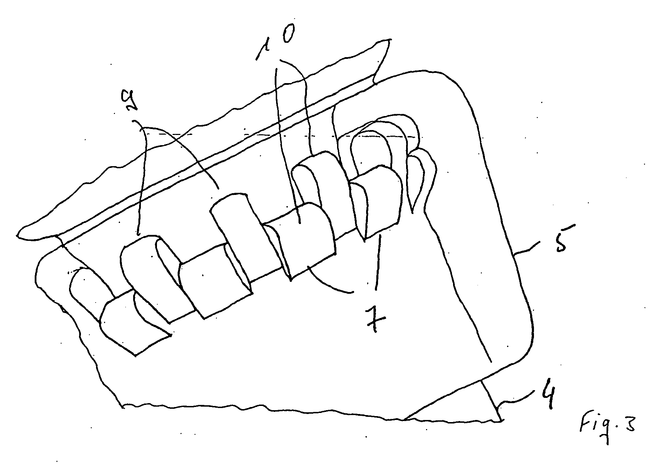

Eine solche Ausgestaltung des Zitzenguamnis ist in der Fig. 3 dargestellt, wobei die Fig. 3 die Kontur der Ausnehmungen 7, 9 darstellt. Die Ausnehmungen 7, 9 sind abwechselnd ausgebildet, sie überlappen sich teilweise. Sie weisen einen Querschnitt auf, der sich in axialer Richtung, in Richtung des Kopfteils 2 erweitert. Bevorzugt ist dabei eine Ausgestaltung, bei der die Ausnehmungen in einen gerundeten Bereich 10 übergehen.

Die Ausnehmungen können auch andere Formen oder Gestalten aufweisen. Es ist nicht zwingend notwendig, dass sämtliche Ausnehmungen die gleiche Gestalt aufweisen. Es besteht die Möglichkeit, dass Gruppen von Ausnehmungen vorgesehen sind, die unterschiedlicher Gestalt und Form sind. Darüber hinaus besteht die Möglichkeit, dass die Ausnehmungen bis in den der Stirnfläche 8 benachbarten Bereich der Hülse 6 hin erstrecken. Es können auch Ausnehmungen vorgesehen sein, die einem Endbereich der Hülse 6 gegenüberliegend ausgebildet sind.

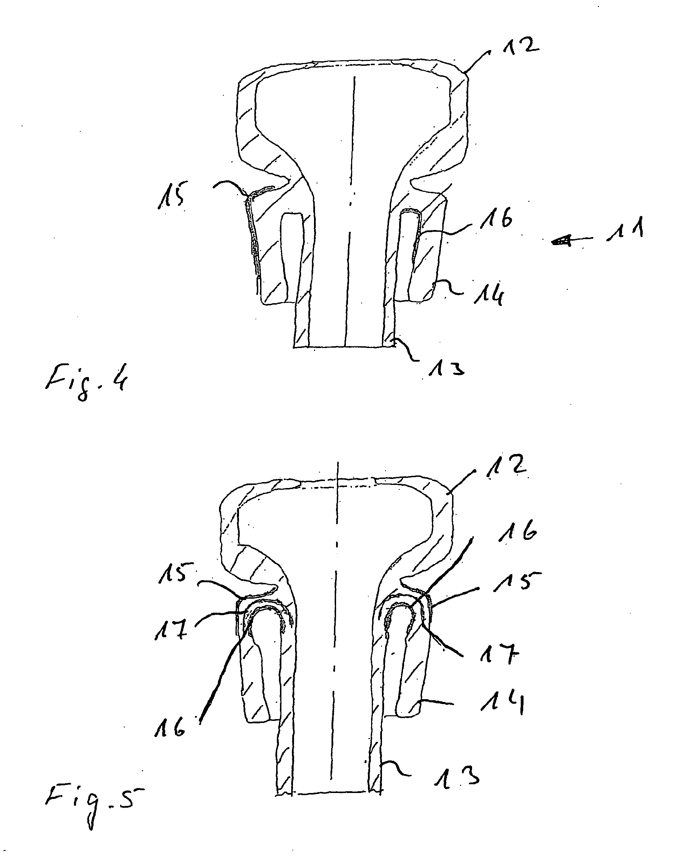

In den Fig. 4 bis 9 sind weitere Ausführungsformen eines Zitzengummis dargestellt. In diesen Ausfuhrungsformen der Zitzengummis ist auf die Darstellung von Ausnehmungen der Übersichtlichkeit wegen verzichtet worden. Es besteht jedoch auch die Möglichkeit, dass die in den Fig. 4 bis 9 dargestellten Zitzengummis auch ohne die Ausnehmungen hergestellt werden. Diese Ausgestaltungen des Zitzengummis ohne Ausnehmungen können auch für sich betrachtet erfindungswesentlich sein.

Fig. 4 zeigt ein Zitzengummi 11 mit einem Kopfteil 12 und einem Schaftteil 13. Der Schaftteil 13 ist umgeben von einem Halterand 14, der unterhalb des Kopfteils 12 ausgebildet ist. Aus der Garstellung ist ersichtlich, dass auf der äußeren Mantelfläche des Halterandes und dort insbesondere im Schulterbereich eine elastische Schicht 15 vorgesehen ist, welche so ausgebildet ist, dass diese Krafteinwirkungen auf das Zitzengummi dämpft. Alternativ oder zusätzlich kann eine Schicht 16 in dem inneren Bereich des Halterandes 14 vorgesehen sein. Die Schicht 15 bzw. 16 kann mit dem Zitzengummi mittels eines Zweikomponenten-Spritzverfahrens hergestellt werden.

Fig. 5 zeigt noch eine weitere Variante eines Zitzengummis. Das Zitzengummi weist einen konventionellen Aufbau mit einem Kopfteil 12, einem Schaftteil 13 und einem Halterand 14 auf. Aus der Darstellung nach Fig. 5 ist ersichtlich, dass insbesondere in dem Schulterbereich des Halterandes 14 eine weitere Schicht 17 vorgesehen ist. Die Schicht 17 kann beispielsweise in Form einer Folie ausgebildet sein, die in die Form eingelegt wird. Es besteht auch die Möglichkeit, dass die Schicht 17 in Form eines Ringes gebildet wird.

Es besteht auch die Möglichkeit, dass lediglich die Schicht 17 vorgesehen ist Die Schicht 17 kann mit dem Zitzengummi mittels eines Zweikomponenten-Spritzverfahrens hergestellt werden.

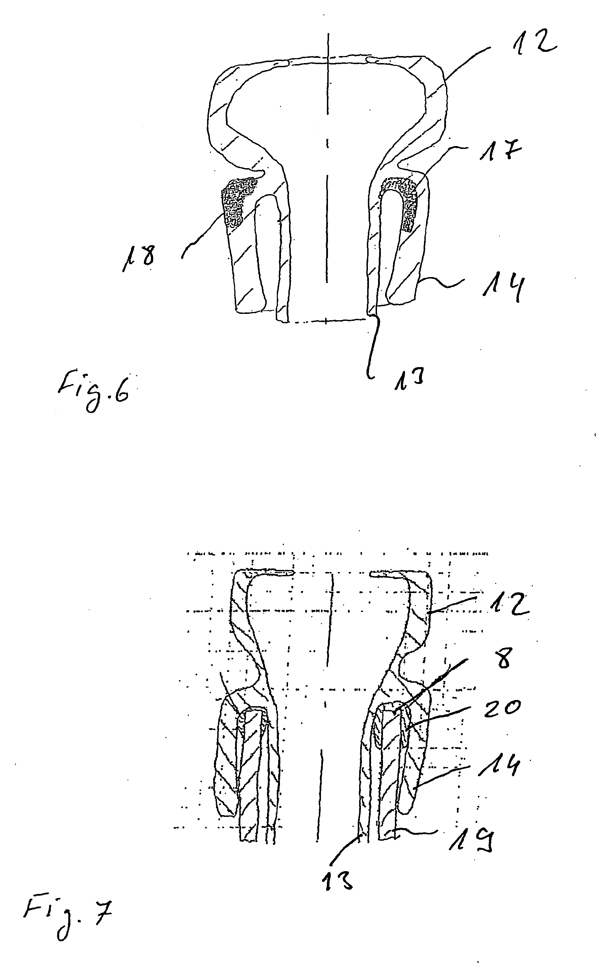

Fig. 6 zeigt ein noch weiteres Ausführungsbeispiel eines Zitzengummis mit einem Kopfteil 2, einem Schaftteil 13 und einem Halterand 14. Der Halterand 14 weist Bereiche 17, 18 auf, welche stoßdämpfend ausgebildet sind. Diese Bereiche können aus einem Material bestehen, welches vorzugsweise weicher ist als das Material des Zitzengummis. Insbesondere sollten die Bereiche so ausgebildet sein, dass diese ein verbessertes Durchschlagverhalten aufweisen in dem Sinne, dass beim Auftreten von Kräften es nicht zu einer Beschädigung des Zitzengummis in dem Bereich der Stirnfläche der Hülse und des Zitzengummis komant. Die Bereiche oder einzelne Bereiche können auch aus einem Schaum gebildet sein.

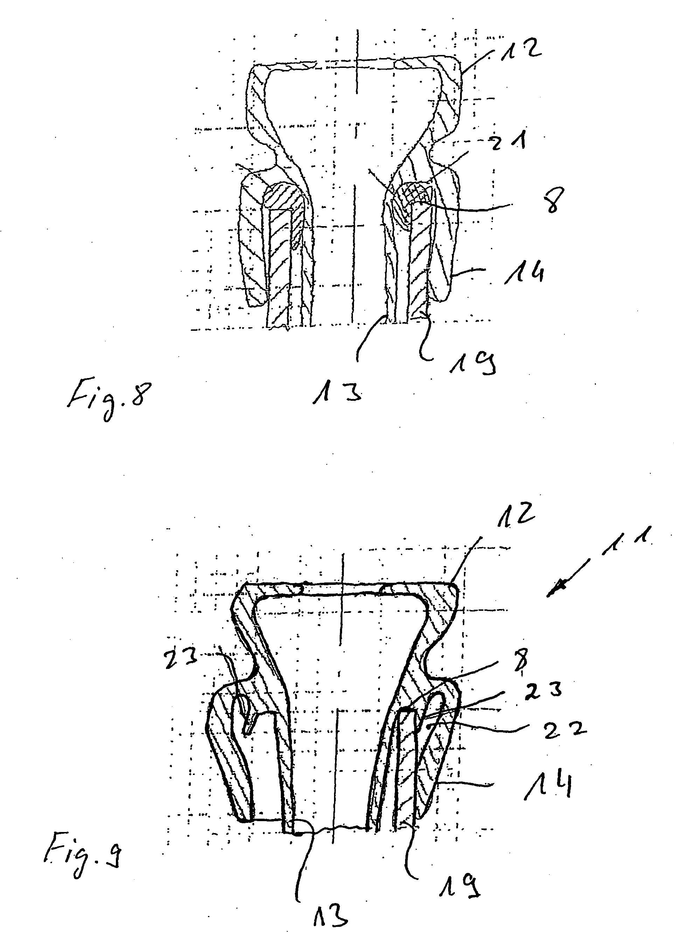

In den Fig. 7 und 8 sind zwei weitere Ausführungsbeispiele eines Zitzengummis dargestellt. Die Zitzengummis weisen ein Kopfteil 12 und einen mit dem Kopfteil 12 verbundenen Schaftteil auf. Das Schaftteil 13 ist umgeben von einem Halterand 14. Zwischen dem Schaftteil 13 und dem Halterand 14 ist eine Hülse 19 vorgesehen. Die Stirnfläche 8 der Hülse 19 ist wenigstens teilweise durch ein Profil, insbesondere eine Profilschnur 20 abgedeckt. So dass das Profil, welches insbesondere aus Gummi besteht, ein Dämpfungselement bildet. Das Profil kann ein mit Polyurethan oder einem anderen Kunststoffbeschichtet sein. Es besteht auch die Möglichkeit, dass das Profil Hohlkammern aufweist, welche mit einem Medium, insbesondere Luft gefüllt sind.

Statt eines Profils 20 oder zusätzlich zu dem Profil 20 zu verwenden, besteht auch die Möglichkeit die Stimfläche 8 durch eine Umbördelung so zu gestalten, dass hohe Flächenpressungen zwischen dem Zitzengummi und der Hülse vermieden werden.

In dem in der Fig. 8 dargestellten Ausführungsbeispiel ist zwischen dem Zitzengummi und der Stirnfläche 8 der Hülse 19 ein Innenring 21 angeordnet. Die Stirnfläche 8 der Hülse 19 wird durch den Innenring 21 abgedeckt. Er legt sich an die Stirnfläche an. Der Innenring ist so ausgebildet, dass dieser sowohl in radialer Richtung als auch in axialer Richtung des Zitzengummis ausweichen kann, wenn Kräfte von außen insbesondere auf den Halterand 14 einwirken. Der Innenring kann als Einlegeteil vor dem Spritzen des Silikons in das Werkzeug eingelegt weiden. Dies kann als ein Zweikomponententeil ausgebildet werden. Gegebenenfalls kann es sich bei dem Innenring um eine Gummi-Metallverbindung mit einer anvulkanisierten Umbüadelung handeln.

Fig. 9 zeigt ein Zitzengummi 11 mit einem Kopfteil 12. An das Kopfteil 12 schließt sich ein Schaftteil 13 an. Das Schaftteil 13 ist umgeben von einem Halterand 14. Im Bereich zwischen dem Halterand 14 und dem Schaftteil 13 ist eine Ausnehmung 22 vorgesehen, welche sich in Umfangsrichtung des Halterandes 14 erstreckt. Die Ausnehmung 22 ist teilweise begrenzt durch eine Lippe 23. Die Lippe 23 ist so ausgebildet, dass diese an den Endbereich einer Hülse 19 zur Anlage gelangt, wenn das Zitzengummi mit der Hülse verbunden ist Das Zitzengummi stützt sich an der Stirnfläche 8 der Hülse ab. Die Ausnehmung 22 bildet ein Luftpolster durch welches Schläge beispielsweise beim Auftreffen der Einheit auf den Boden gedämpft werden. Die Ausnehmung 22 ist so ausgebildet, dass im Wesentlichen die Flächenpressung des für das Material des Gummis kritischen Wertes nicht überschritten wird.

Durch das erfindungsgemäße Zitzengummi und den erfindungsgemäßen Melkbecher wird eine Beschädigung des Zitzengummis durch Schläge, Auftreten einer Kuh, Herabfallen des Melkzeugs oder desgleichen im Wesentlichen vermieden.

### Bezugszeichenliste

- 1: Zitzengummi
- 2: Kopfteil
- 3: Einführöffnung
- 4: Schaftteil
- 5: Halterand
- 6: Hülse
- 7: Ausnehmung
- 8: Stirnfläche
- 9: Ausnehmung
- 10: Bereich
- 11: Zitzengummi
- 12: Kopfteil
- 13: Schaftteil
- 14: Halterand
- 15: Schicht
- 16: Schicht
- 17: Bereich
- 18: Bereich
- 19: Hülse
- 20: Profil
- 21: Inneasring
- 22: Ausnehmung
- 23: Lippe

## Patentansprüche

1. Zitzengummi (1) zur Verwendung an einem Melkbecher mit einem Kopfteil (2) mit einer Einführöffnung (3) für eine Zitze eines Tieres, einem mit dem Kopfteil (2) verbundenen Schaftteil (4) und mit einem unterhalb des Kopfteils (2) angeordneten Halterand (5), der beabstandet zum Schaftteil (4) diesen umgibt, wobei der Halterand (5) in seiner inneren Mantelfläche wenigstens eine sich im wesentlichen in Umfangsrichtung des Halterandes (5) ersteckende Ausnehmung (7) aufweist,
**dadurch gekennzeichnet, dass** mehrere Ausnehmungen (7, 9) vorgesehen sind, welche im wesentlichen in Umfangsrichtung des Halterandes (5) betrachtet beabstandet sind.

2. Zitzengummi nach Anspruch 1, **dadurch gekennzeichnet, dass** die Ausnehmungeh (7, 9) im wesentlichen äquidistant zueinander ausgebildet sind.

3. Zitzengummi nach Anspruch 1 oder 2, **dadurch gekennzeichnet, dass** die Ausnehmungen (7, 9) in einer im wesentlichen axialen Richtung des Zitzengummis (1) beabstandet zueinander angeordnet sind.

4. Zitzengummi nach Ansprach 3, **gekennzeichnet durch** einen ersten Satz von Ausnehmungen (7), und einen zweiten Satz von Ausnehmungen (9), wobei die Ausnehmungen (7) des ersten Satzes und die Ausnehmungen (9) des zweiten Satzes im wesentlichen in Umfangsrichtung und in axialer Richtung so versetzt sind, dass in einer axialen Richtung betrachtet zwischen zwei benachbarten Ausnehmungen (7) des ersten Satzes wenigstens eine Ausnehmung (9) des zweiten Satzes vorgesehen ist.

5. Zitzengummi nach wenigstens einem der vorhergehenden Ansprüche 1 bis 4, **dadurch gekennzeichnet, dass** der Querschnitt der wenigstens einen Ausnehmung (7, 9) zum Kopfteil (2) hin zunimmt.

6. Zitzengummi nach Anspruch 5, **dadurch gekennzeichnet, dass** der Querschnitt im Wesentlichen dreieckförmig ist.

7. Zitzengummi nach wenigstens einem der vorhergehenden Anspräche 1 bis 6, **dadurch gekennzeichnet, dass** der Halterand (5) wenigsten eine Einlage aufweist.

8. Zitzengummi nach Anspruch 7, **dadurch gekennzeichnet, dass** dieses und die wenigstens eine Einlage mittels des Zweikomponenten-Spritzverfahrens hergestellt sind.

9. Melkbecher mit einer Hülse (6) und einem mit der Hülse (6) verbundenen Zitzengummi (1), der einem Kopfteil (2) mit einer Einführöffnung (3) für eine Zitze eines Tieres, einem mit dem Kopfteil (2) verbundenen Schaftteil (4) und mit einem unterhalb des Kopfteils (2) angeordneten Halterand (5), der beabstandet zum Schaflteil (4) diesen umgibt, aufweist, wobei der Halterand (5) einen Bereich der Hülse (6) umgibt, der Halterand (5) in seiner inneren Mantelfläche wenigstens eine sich im wesentlichen in Umfangsrichtung des Halterandes (5) ersteckende Ausnehmung (7) aufweist,
**dadurch gekennzeichnet, dass** mehrere Ausnehmungen (7, 9) vorgesehen sind, welche im wesentlichen in Umfangsrichtung des Halterandes (5) betrachtet beabstandet sind.

10. Melkbecher nach Anspruch 9, **dadurch gekennzeichnet, dass** das Zitzengummi (1) nach wenigstens einem der vorhergehenden Ansprüche 2 bis 8 ausgebildet ist.

## Claims

1. Teat rubber (1) for use on a milking cup with a head part (2) with an insertion opening (3) for a teat of an animal, a shaft part (4) connected to the head part (2), and with a holding rim (5) arranged below the head part (2), and this rim surrounds the shaft part (4) at a distance from it, whereby the holding rim (5) has in its inner lateral surface at least one recess (7) that extends essentially in the circumferential direction of the holding rim (5), **characterized in that** several recesses (7, 9) are provided that are essentially at a distance from one another when viewed in the circumferential direction of the holding rim (5).

2. Teat rubber according to Claim 1, **characterized in** the recesses (7, 9) are designed essentially in an equidistant manner to one another.

3. Teat rubber according to Claim 1 or 2, **characterized in** the recesses (7, 9) are arranged at a distance from one another in a essentially axial direction of the teat rubber (1).

4. Teat rubber according to Claim 3, **characterized in** a first set of recesses (7) and a second set of recesses (9), whereby the recesses (7) of the first set and the recesses (9) of the second set are displaced essentially in the circumferential direction and in the axial direction in such a way that when viewed in an axial direction, at least one recess (9) of the second set is provided between two neighboring recesses (7) of the first set.

5. Teat rubber according to at least one of the previous Claims 1 to 4, **characterized in** the cross-section of the at least one recess (7, 9) increases toward the head part (2).

6. Teat rubber according to Claim 5, **characterized in** the cross-section is essentially triangular.

7. Teat rubber according to at least one of the previous Claims 1 to 6, **characterized in** the holding rim (5) has at least one insert.

8. Teat rubber according to Claim 7, **characterized in** this and the at least one insert are produced by the two-component injection method.

9. Milking cup with a sleeve (6) and a teat rubber (1) connected to the sleeve (6), that has a head part (2) with an insertion opening (3) for a teat of an animal, a shaft part (4) that is connected to the head part (2) and a holding rim (5) arranged below the head part (2), that surrounds this at a distance from the shaft part (4), whereby the holding rim (5) surrounds a region of the sleeve (6), whereby the holding rim (5) has in its inner lateral surface at least one recess (7) that extends essentially in the circumferential direction of the holding rim (5), **characterized in that** several recesses (7, 9) are provided that are essentially at a distance from one another when viewed in the circumferential direction of the holding rim (5).

10. Milking cup according to Claim 9, **characterized in** the teat rubber (1) is designed according to at least one of the previous Claims 2 to 9.

## Revendications

1. Elément en caoutchouc pour trayons (1) destiné à l'utilisation sur un godet de traite, comprenant une partie de tête (2) avec une ouverture d'introduction (3) pour un trayon d'un animal, une partie de tige (4) connectée à la partie de tête (2) et un bord de retenue (5) disposé sous la partie de tête (2), qui entoure la partie de tige (4) à distance de celle-ci, le bord de retenue (5) présentant, dans sa surface d'enveloppe intérieure au moins un évidement (7) s'étendant essentiellement dans la direction périphérique du bord de retenue (5),
**caractérisé en ce que** plusieurs évidements (7, 9) sont prévus, lesquels sont espacés, vu essentiellement dans la direction périphérique du bord de retenue (5).

2. Elément en caoutchouc pour trayons selon la revendication 1, **caractérisé en ce que** les évidements (7, 9) sont réalisés essentiellement de manière équidistante les uns des autres.

3. Elément en caoutchouc pour trayons selon la revendication 1 ou 2, **caractérisé en ce que** les évidements (7, 9) sont disposés à distance les uns des autres dans une direction essentiellement axiale de l'élément en caoutchouc pour trayons (1) .

4. Elément en caoutchouc pour trayons selon la revendication 3, **caractérisé par** un premier jeu d'évidements (7), et un deuxième jeu d'évidements (9), les évidements (7) du premier jeu et les évidements (9) du deuxième jeu étant décalés essentiellement dans la direction périphérique et dans la direction axiale de telle sorte que, vu dans une direction axiale, au moins un évidement (9) du deuxième jeu soit prévu entre deux évidements (7) adjacents du premier jeu.

5. Elément en caoutchouc pour trayons selon l'une quelconque des revendications précédentes 1 à 4, **caractérisé en ce que** la section transversale de l'au moins un évidement (7, 9) augmente vers la partie de tête (2).

6. Elément en caoutchouc pour trayons selon la revendication 5, **caractérisé en ce que** la section transversale est essentiellement triangulaire.

7. Elément en caoutchouc pour trayons selon l'une quelconque des revendications précédentes 1 à 6, **caractérisé en ce que** le bord de retenue (5) présente au moins un insert.

8. Elément en caoutchouc pour trayons selon la revendication 7, **caractérisé en ce que** celui-ci et l'au moins un insert sont fabriqués au moyen d'un procédé de pulvérisation à deux composants.

9. Godet de traite comprenant un manchon (6) et un élément en caoutchouc pour trayon (1) connecté au manchon (6), qui présente une partie de tête (2) avec une ouverture d'insertion (3) pour un trayon d'un animal, une partie de tige (4) connectée à la partie de tête (2) et un bord de retenue (5) disposé sous la partie de tête (2), qui entoure la partie de tige (4) à distance de celle-ci, le bord de retenue (5) entourant une région du manchon (6), le bord de retenue (5) présentant dans sa surface d'enveloppe interne au moins un évidement (7) s'étendant essentiellement dans la direction périphérique du bord de retenue (5), **caractérisé en ce que** plusieurs évidements (7, 9) sont prévus, lesquels sont espacés, vu essentiellement dans la direction périphérique du bord de retenue (5).

10. Godet de traite selon la revendication 9, **caractérisé en ce que** l'élément en caoutchouc pour trayons (1) est réalisé selon l'une quelconque des revendications précédentes 2 à 8.
